# EUROPEAN PATENT APPLICATION

(11) **EP 4 379 588 A1**
(43) Date of publication of application: **05.06.2024**
(21) Application number: 23212546.8
(22) Date of filing: 28.11.2023
(51) Int. Cl.: G06F 21/62, G06F 21/79, G06F 21/85

(54) **STORAGE DEVICE FOR STORING PLURALITY OF PIECES OF DEBUG INFORMATION AND OPERATING METHOD THEREOF**

(30) Priority: 29.11.2022 KR 20220163422
(71) Applicant: Samsung Electronics Co., Ltd., Suwon-si, Gyeonggi-do 16677 (KR)
(72) Inventor: YOUM, Yunho, Suwon-si, Gyeonggi-do 16677 (KR); KIM, Yongmin, Suwon-si, Gyeonggi-do 16677 (KR); LEE, Seungho, Suwon-si, Gyeonggi-do 16677 (KR); JEONG, Jiman, Suwon-si, Gyeonggi-do 16677 (KR); CHOI, Myungsik, Suwon-si, Gyeonggi-do 16677 (KR)
(74) Representative: Kuhnen & Wacker Patent- und Rechtsanwaltsbüro PartG mbB

(57) **Abstract**

A storage device is provided. The storage device includes: a first memory configured to store a plurality of pieces of debug information; and a controller configured to: check an access level of target debug information among the plurality of pieces of debug information according to a debug information read command provided by a host device; and perform a security operation for the target debug information based on the access level of the target debug information.

## Description

### CROSS-REFERENCE TO RELATED APPLICATION

This application claims priority to Korean Patent Application No. 10-2022-0163422, filed on November 29, 2022, in the Korean Intellectual Property Office.

### BACKGROUND

The present disclosure relates to a storage device, and particularly, to a storage device for storing a plurality of pieces of debug information and an operating method of the storage device.

Electronic devices perform unique functions according to operations of electronic circuits included therein. An electronic device may perform a unique function while operating independently. An electronic device may perform a unique function while communicating with another electronic device.

A storage device is an example of an electronic device. A storage device may provide a storage service to a user by storing and outputting data according to operations of components included in the storage device. A storage device may manage data independently or may manage data while communicating with another electronic device. A host device may provide a service to a user of the host device by communicating with a storage device. For example, a host device may transmit data required to be stored to a storage system and request necessary data from the storage system.

A storage device may store a plurality of pieces of debug information for checking a state of the storage device when a problem occurs in performing a memory operation. A manufacturer of storage devices may define a debug information read command to access the plurality of pieces of debug information stored in the storage device. However, without special restrictions on the use of a debug information read command, a plurality of pieces of debug information of a storage device may be exposed to a hacking risk, which may cause a serious security problem for the storage device.

### SUMMARY

One or more example embodiments provide a storage device and an operating method of the storage device that sets access levels to a plurality of pieces of debug information according to importance of the plurality of pieces of debug information and manages access to the plurality of pieces of debug information based on set access levels in order to effectively enhance the security of the plurality of pieces of debug information.

According to an aspect of an example embodiment, a storage device includes: a first memory configured to store a plurality of pieces of debug information; and a controller configured to: check an access level of target debug information among the plurality of pieces of debug information according to a debug information read command provided by a host device; and perform a security operation for the target debug information based on the access level of the target debug information.

According to another aspect of an example embodiment, a storage device includes: a security memory configured to store a plurality of pieces of debug information; and a controller configured to: set access levels of the plurality of pieces of debug information based on characteristics of the plurality of pieces of debug information; and output the plurality of pieces of debug information to a host device based on output methods corresponding to the access levels.

According to another aspect of an example embodiment, a storage device includes: a first memory configured to store a plurality of pieces of debug information; a second memory configured to store security information for use in a security operation for the plurality of pieces of debug information; and a controller configured to perform the security operation by using the security information based on an access level of target debug information, among the plurality of pieces of debug information, according to a debug information read command, provided by a host device, for the target debug information.

### BRIEF DESCRIPTION OF DRAWINGS

The above and other aspects and features will be more apparent from the following description of example embodiments, taken in conjunction with the accompanying drawings, in which:
FIG. 1 is a block diagram illustrating a storage system according to an example embodiment;
FIGS. 2A, 2B and 2C are views illustrating a three-dimensional (3D) V-NAND structure applicable to a storage device of FIG. 1;
FIG. 3 is a flowchart illustrating an operating method of a storage system, according to an example embodiment;
FIG. 4 is a block diagram illustrating a storage device according to an example embodiment;
FIGS. 5A and 5B are diagrams illustrating implementation examples of a management table of FIG. 4;
FIG. 6 is a diagram illustrating a table in which optional security operations according to first to third access levels of FIG. 4 are arranged;
FIG. 7A is a block diagram illustrating a storage device according to an example embodiment, and FIG. 7B is a diagram illustrating a table in which optional security operations according to first to fourth access levels of FIG. 7A are arranged;
FIG. 8 is a diagram illustrating a plurality of pieces of debug information stored in a first memory region, according to an example embodiment;
FIG. 9 is a block diagram illustrating a storage device according to an example embodiment;
FIG. 10 is a flowchart illustrating a debug user authentication operation in a storage system, according to an example embodiment;
FIG. 11 is a block diagram illustrating a debug information encryption circuit according to an example embodiment;
FIG. 12 is a flowchart illustrating an operating method of a storage device, according to an example embodiment;
FIG. 13 is a block diagram illustrating a storage device according to an example embodiment;
FIG. 14 is a flowchart illustrating a key update operation in a storage system, according to an example embodiment;
FIG. 15 is a flowchart illustrating an operating method of a storage device, according to an example embodiment;
FIGS. 16A and 16B are diagrams illustrating examples of setting access levels for a plurality of pieces of debug information of a first storage device and a second storage device according to an example embodiment;
FIG. 17 is a block diagram illustrating a memory card system according to an example embodiment; and
FIG. 18 is a schematic block diagram illustrating a universal flash storage (UFS) system according to an example embodiment.

### DETAILED DESCRIPTION

Example embodiments will be described more fully hereinafter with reference to the accompanying drawings. Expressions such as "at least one of," when preceding a list of elements, modify the entire list of elements and do not modify the individual elements of the list. For example, the expression, "at least one of a, b, and c," should be understood as including only a, only b, only c, both a and b, both a and c, both b and c, or all of a, b, and c.

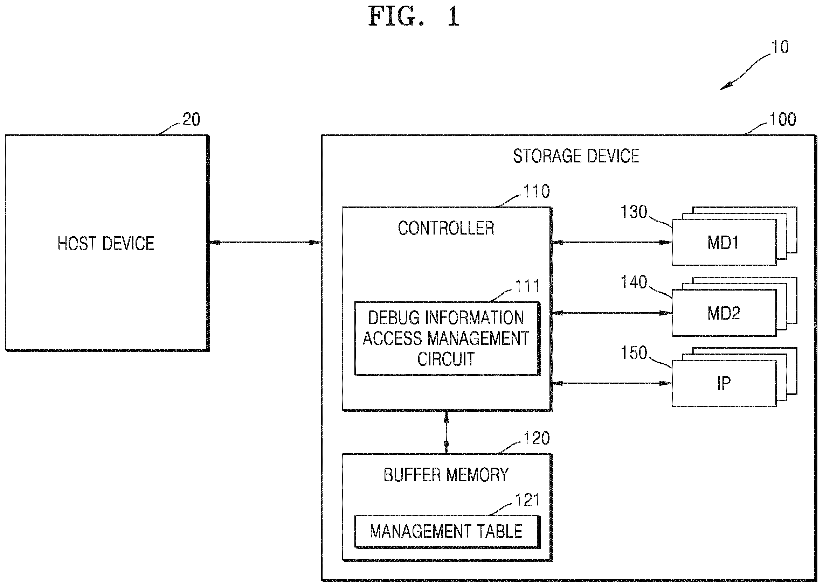

FIG. 1 is a block diagram illustrating a storage system 10 according to an example embodiment.

Referring to FIG. 1, the storage system 10 may include a host device 20 and a storage device 100. The host device 20 may control the entire operation of the storage system 10. The host device 20 may run an operating system and perform various applications that provide Internet browsers, games, videos, cameras, and so on. For example, the operating system running on the host device 20 may include a file system for managing files and a device driver for controlling peripheral devices including the storage device 100 at an operating system level.

The host device 20 may include an application processor, a central processing unit, a microprocessor, and so on. The host device 20 may include a processor including one processor core or include a processor including a plurality of processor cores.

The host device 20 may include a security element, and the security element may control an operation of the host device 20 in a security mode or perform a security operation according to a function of the secure element itself. The secure element may include circuitry, such as transistors, capacitors, logic gates, and other circuit elements to implement certain functionality, and may process and/or store secure data. For example, the security element may support a tamper-resistant function of ensuring protection against tampering attacks, such as replay attacks, micro-probing, software attacks, eavesdropping, and fault injection. In some example embodiments, the security element may perform an operation associated with a security operation of the storage device 100 described below, and furthermore, the security element may also perform an operation necessary for the host device 20 when the storage device 100 performs a security operation.

The host device 20 may control a data write/read operation for the storage device 100. For example, the host device 20 may transmit a write command, a write address, and data to the storage device 100 to write data to the storage device 100. The host device 20 may transmit a read command and a read address to the storage device 100 to read data from the storage device 100 and receive the read data from the storage device 100.

In some example embodiments, the host device 20 may transmit a debug information read command to the storage device 100 to read target debug information among a plurality of pieces of debug information stored in the storage device 100. In example embodiments, the debug information read command may be defined by a manufacturer of the storage device 100 to access target debug information of the storage device 100. The debug information read command may have various formats depending on the manufacturers of the storage device 100, and example embodiments may be applied to debug information read commands of various formats.

The host device 20 may transmit either a debug information address indicating an address including target debug information or a symbol indicating the target debug information to the storage device 100 together with the debug information read command. As used herein, the target debug information refers to debug information that the host device 20 requests to read. The storage device 100 may perform an operation according to an example embodiment in response to a debug information read command received from the host device 20, and details related to an operation of the storage device 100 are described below.

As used herein, the debug information may indicate information previously stored to solve a problem when a problem occurs in the operation of the storage device 100 or accumulates whenever the operation is performed. The debug information may change depending on the types of firmware executed by the storage device 100, and example embodiments may also be applied to various types of debug information.

The storage device 100 may include a controller 110, a buffer memory 120, a plurality of first memory devices 130, a plurality of second memory devices 140, and pieces of intellectual property (IP) 150, each of which includes circuitry such as transistors, capacitors, logic gates, and other circuit elements to implement certain functionality described in more detail below. Although FIG. 1 illustrates the plurality of first memory devices 130, the plurality of second memory devices 140, and the pieces of IP 150 as separate elements, this is only an example, and example embodiments are not limited thereto, and at least one of the plurality of first memory devices 130, the plurality of second memory devices 140, and the pieces of IP 150 may be a single device. The controller 110 may control the entire operation of the storage device 100. For example, the controller 110 may control a data write/read operation of the storage device 100 in response to a command received from the host device 20.

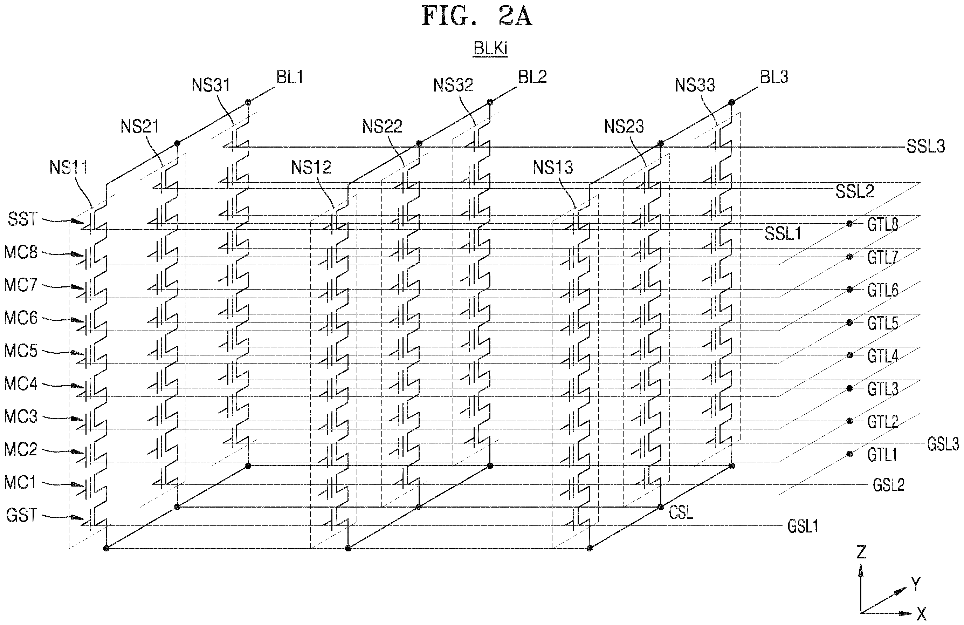

The plurality of first memory devices 130 and the plurality of second memory devices 140 may each store a plurality of pieces of data. In some example embodiments, the plurality of first memory devices 130 may each include a flash memory device that is a nonvolatile memory device. In some example embodiments, the plurality of first memory devices 130 may include phase change random access memory (PRAM), resistance RAM (RRAM), nano floating gate memory (NFGM), polymer RAM (PoRAM), magnetic RAM (MRAM), ferroelectric RAM (FRAM), and memory similar thereto. Detailed aspects of the plurality of first memory devices 130 are described below with reference to FIGS. 2A to 2C.

In some example embodiments, the plurality of second memory devices 140 may be volatile memory devices. The plurality of second memory devices 140 may include at least one of a volatile memory device, such as dynamic RAM (DRAM), static RAM (SRAM), and synchronous DRAM (SDRAM).

In some example embodiments, the pieces of IP 150 may include a hardware accelerator to assist an operation of the controller 110 or an operation of the host device 20. For example, the hardware accelerator may perform encryption or decryption of a plurality of pieces of data, generate values necessary for encryption or decryption of a plurality of pieces of data, or perform a logical operation of the controller 110 or the host device 20.

The buffer memory 120 may store commands and data executed and processed by the controller 110 and may temporarily store data stored or desired to be stored in the plurality of first memory devices 130. In some example embodiments, the buffer memory 120 may be included in any one of the plurality of second memory devices 140. For example, the buffer memory 120 may include volatile memory, such as DRAM or SRAM.

Hereinafter, a configuration and an operation of the storage device 100 according to example embodiments are schematically described.

In some example embodiments, the controller 110 may include a debug information access management circuit 111. In some example embodiments, the debug information access management circuit 111 may be implemented as software, and accordingly, when the controller 110 executes certain code, an operation of the debug information access management circuit 111 may be performed. In addition, in some example embodiments, the debug information access management circuit 111 may be implemented by a field programmable gate array (FPGA) or an application specific integrated circuit (ASIC) and may be separated from the controller 110. An operation of the debug information access management circuit 111 to be described below may be understood as an operation of the controller 110 or an operation of the storage device 100.

In some example embodiments, the buffer memory 120 may store a management table 121 used by the debug information access management circuit 111. In some example embodiments, the management table 121 may be backed up in the plurality of first memory devices 130.

In some example embodiments, at least one of the plurality of first memory devices 130, the plurality of second memory devices 140, and the pieces of IP 150 may store a plurality of pieces of debug information. In some example embodiments, the pieces of IP 150 may include a memory device for storing a plurality of pieces of debug information. In some example embodiments, the plurality of first memory devices 130, the plurality of second memory devices 140, and the pieces of IP 150 may be physically or logically divided into a plurality of memory regions, and a plurality of pieces of debug information may be stored in a security memory region among the plurality of memory regions.

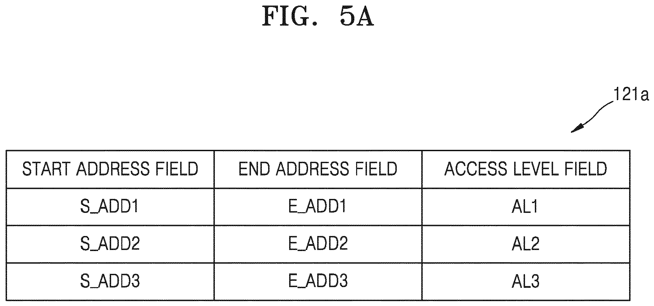

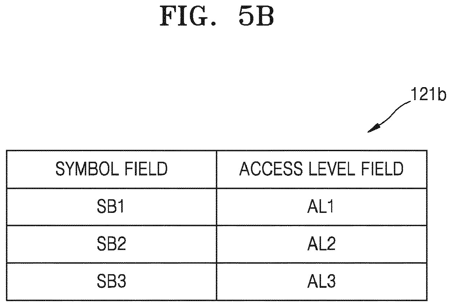

In some example embodiments, the debug information access management circuit 111 may set access levels of the plurality of pieces of debug information and generate the management table 121 based on a setting result. The management table 121 may be composed of a plurality of fields which indicate access levels respectively mapped to a plurality of pieces of debug information. A detailed example thereof is described below with reference to FIGS. 5A and 5B. For example, the debug information access management circuit 111 may set access levels of a plurality of pieces of debug information based on importance of the plurality of pieces of debug information. The debug information access management circuit 111 may set the access level of the corresponding debug information to be higher as the importance of the debug information increases. The debug information access management circuit 111 may manage access to the corresponding debug information from the host device 20 to be more difficult as the access level of the debug information increases. In another example, the debug information access management circuit 111 may set access levels of a plurality of pieces of debug information based on an access level policy defined in firmware executed by the controller 110.

In some example embodiments, the debug information access management circuit 111 may check an access level of target debug information in response to a debug information read command received from the host device 20 and perform a security operation for the target debug information based on the checked access level. Specifically, the debug information access management circuit 111 may check an access level mapped to the target debug information by referring to the management table 121 stored in the buffer memory 120.

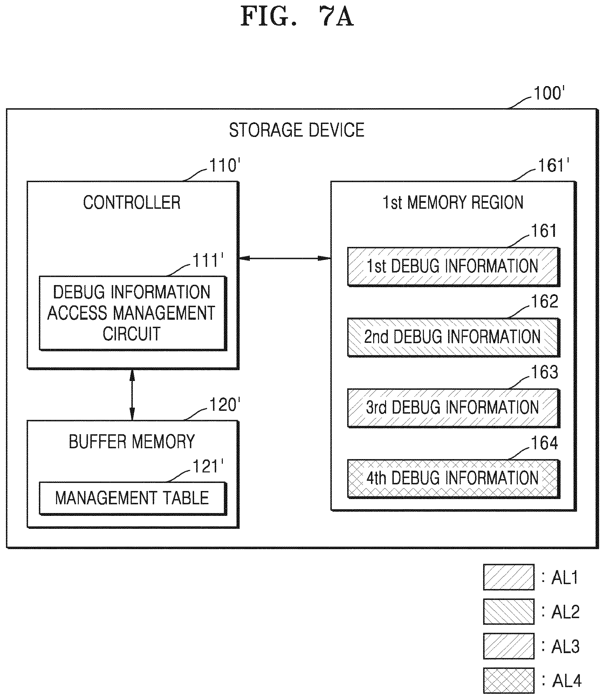

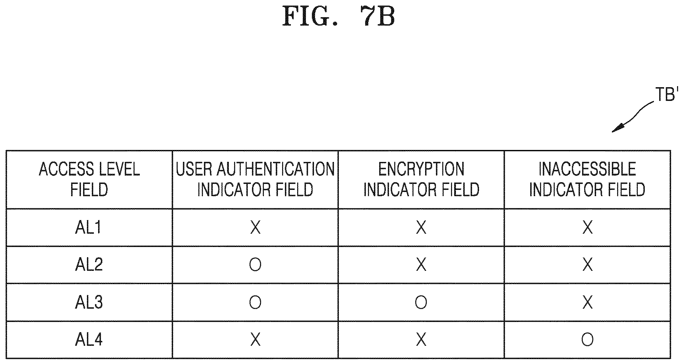

In some example embodiments, the access levels of the plurality of pieces of debug information may include first to third access levels. For example, debug information with the lowest security level may be set to the first access level, debug information with a medium security level may be set to the second access level, and debug information with the highest security level may be set to the third access level. However, this is only an example and is not limited thereto, and the access levels may include 4 or more access levels. An example of the fourth access level that may be additionally defined is described below with reference to FIGS. 7A and 7B.

For example, when an access level of target debug information is the first access level, the debug information access management circuit 111 may skip a security operation for the target debug information, may read the target debug information from any one of the plurality of first memory devices 130, the plurality of second memory devices 140, and the pieces of IP 150, and may transmit the read target debug information to the host device 20. That is, the debug information access management circuit 111 may provide the read target debug information in the first access level to the host device 20 without performing a separate security operation.

For example, when the access level of the target debug information is the second access level, the debug information access management circuit 111 may perform a security operation including an operation of checking whether the host device 20 is authenticated based on a debug user authentication flag, and when the host device 20 has been authenticated, the debug information access management circuit 111 may read the target debug information from any one of the plurality of first memory devices 130, the plurality of second memory devices 140, and the pieces of IP 150 and transmit the read target debug information to the host device 20. In addition, when the host device 20 has not been authenticated, access of the host device 20 to the target debug information may be blocked, and the debug information access management circuit 111 may notify the host device 20 that the target debug information may not be transmitted such that the host device 20 may perform a debug user authentication operation.

For example, when the access level of the target debug information is the third access level, the debug information access management circuit 111 may perform a security operation including at least one of an operation of checking whether the host device 20 is authenticated based on the debug user authentication flag and an operation of encrypting the target debug information. Specifically, when the host device 20 has been authenticated, the debug information access management circuit 111 may encrypt the target debug information read from any one of the plurality of first memory devices 130, the plurality of second memory devices 140, and the pieces of IP 150. The debug information access management circuit 111 may transmit the encrypted target debug information to the host device 20. In addition, when the host device 20 has not been authenticated, the debug information access management circuit 111 may block access of the host device 20 to the target debug information and may notify the host device 20 that the target debug information may not be transmitted such that the host device 20 may perform a debug user authentication operation.

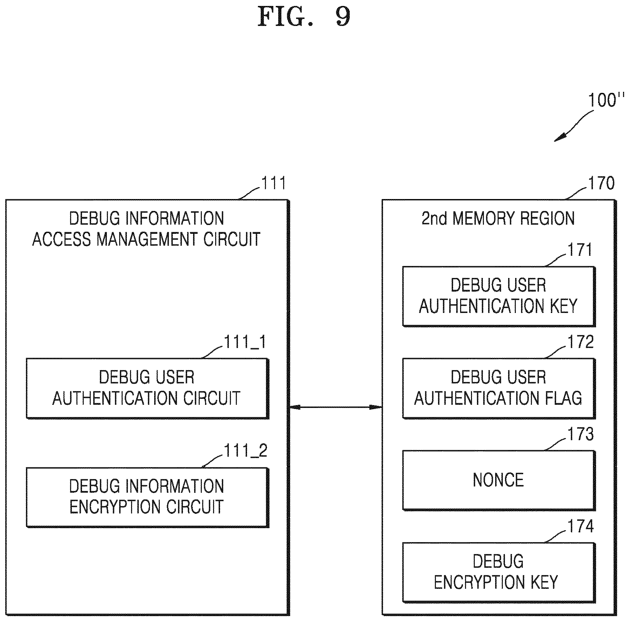

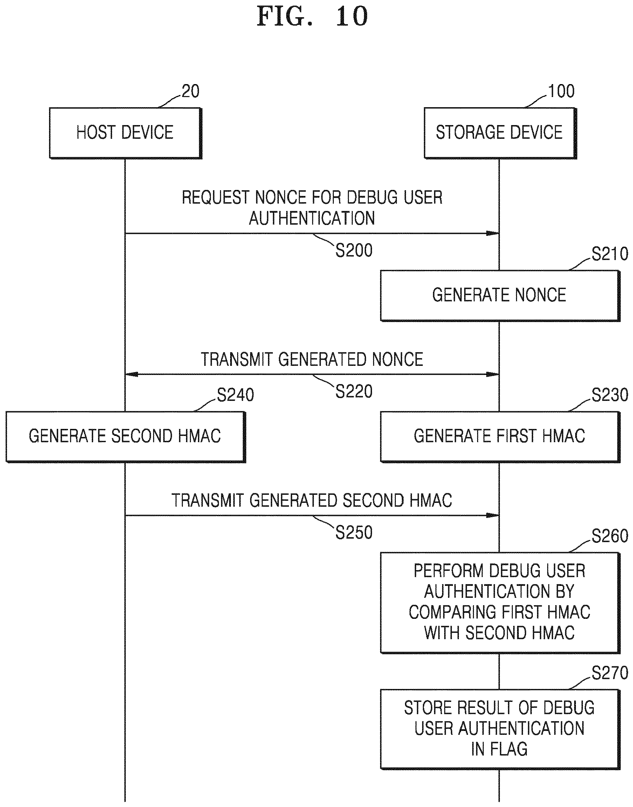

In some example embodiments, the debug information access management circuit 111 may manage the debug user authentication flag referred to check whether the host device 20 is authenticated. For example, the debug information access management circuit 111 may perform a debug user authentication operation in association with the host device 20 and store an authentication result in the debug user authentication flag. A detailed example of the debug user authentication operation is described below with reference to FIGS. 9 and 10.

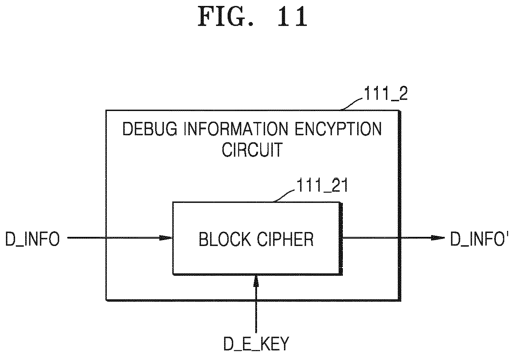

In some example embodiments, the debug information access management circuit 111 may perform an encryption operation for target debug information based on a debug encryption key and provide the encrypted target debug information to the host device 20. Detailed aspects of the encryption operation are described below with reference to FIGS. 9 and 11.

The storage device 100 according to an example embodiment may perform an optional security operation according to the access levels of the plurality of pieces of debug information before providing the plurality of pieces of debug information to the host device 20 in response to debug information read commands received from the host device 20. Accordingly, a security level for a plurality of pieces of debug information with high importance may be increased, and as a result, the storage device 100 may provide improved security performance.

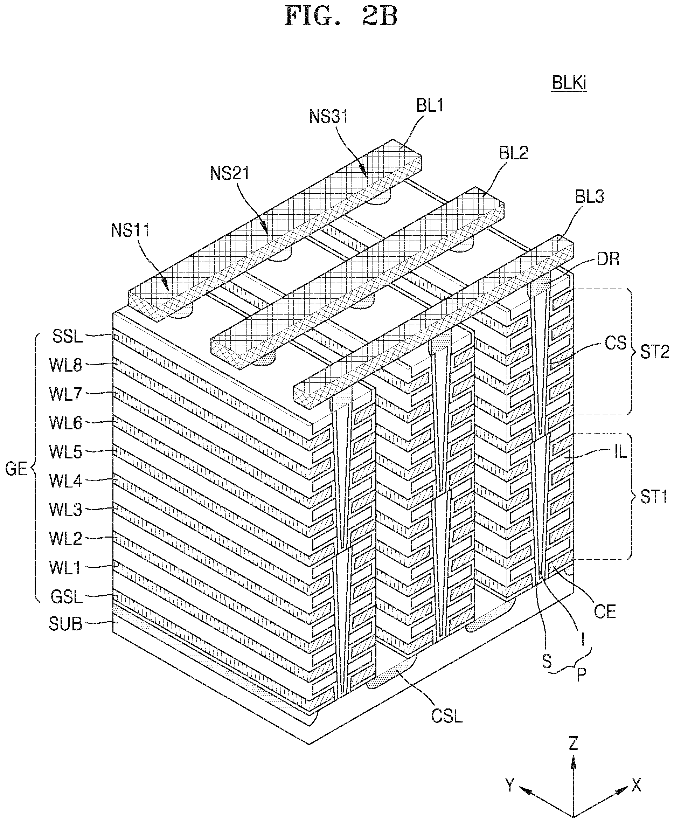

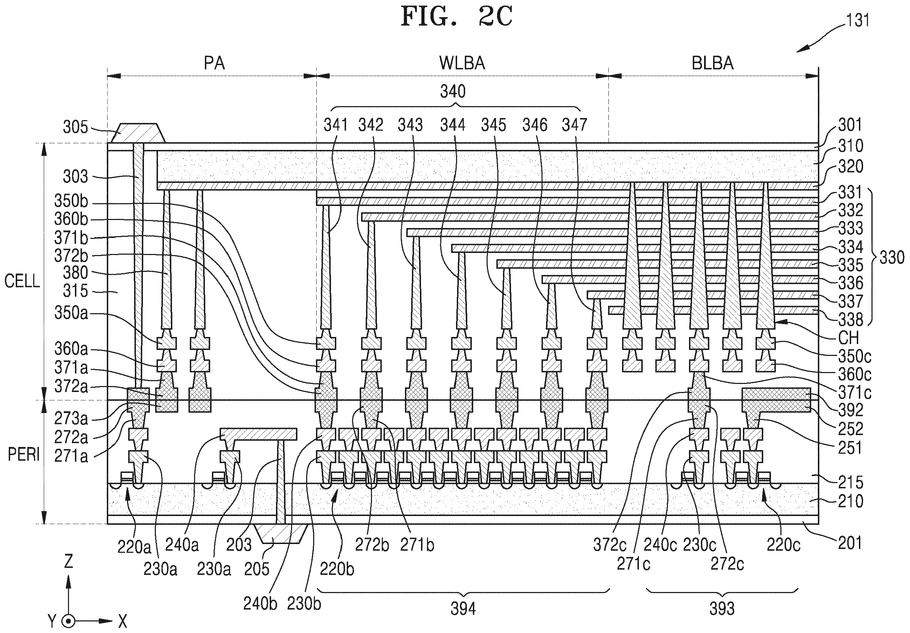

FIGS. 2A, 2B and 2C are views illustrating a three-dimensional (3D) V-NAND structure applicable to the storage device 100 of FIG. 1. The plurality of first memory devices 130 (illustrated in FIG. 1) of the storage device 100 (illustrated in FIG. 1 ) may each include a plurality of memory blocks. FIGS. 2A and 2B illustrate a structure of one memory block BLKi among a plurality of memory blocks, and FIG. 2C illustrates one implementation example of a nonvolatile memory 131 included in each of the plurality of first memory devices 130 (FIG. 1).

Referring to FIG. 2A, the memory block BLKi may include a plurality of memory NAND strings NS11 to NS33 connected to bit lines BL1, BL2, and BL3 and a common source line CSL. Each of the plurality of memory NAND strings NS11 to NS33 may include a string select transistor SST, a plurality of memory cells MC1 to MC8, and a ground select transistor GST. For the sake of brevity of the drawing, FIG. 2A illustrates that each of the plurality of memory NAND strings NS11 to NS33 includes eight memory cells MC1 to MC8, but the number of memory cells is not limited thereto.

The string select transistor SST may be connected to a corresponding string select line among string select lines SSL1, SSL2, and SSL3. The plurality of memory cells MC1 to MC8 may be respectively connected to corresponding gate lines among gate lines GTL1 to GTL8. The gate lines GTL1 to GTL8 may correspond to word lines, and some of the gate lines GTL1 to GTL8 may correspond to dummy word lines. The ground select transistor GST may be connected to a corresponding ground select line among ground select lines GSL1, GSL2, and GSL3. The string select transistor SST may be connected to a corresponding bit line among the bit lines BL1, BL2, and BL3, and the ground select transistor GST may be connected to a common source line CSL.

Gate lines (for example, the gate line GTL1) at the same height may be connected in common, and the ground select lines GSL1, GSL2, and GSL3 and the string select lines SSL1, SSL2, and SSL3 may be separated from each other. Although FIG. 2A illustrates that the memory block BLKi is connected to eight gate lines GTL1 to GTL8 and three bit lines BL1, BL2, and BL3, example embodiments are not limited thereto.

Further referring to FIG. 2B, the memory block BLKi is formed in a direction perpendicular to a substrate SUB. Memory cells constituting the memory NAND strings NS11 to NS33 are formed by stacking a plurality of semiconductor layers.

The common source line CSL extends in a first direction (a Y direction) on the substrate SUB. A plurality of insulating layers IL extending in the first direction (the Y direction) may be sequentially provided in a third direction (a Z direction) on a region of the substrate SUB between two adjacent common source lines CSL, and the plurality of insulating layers IL may be separated from each other by a preset distance in the third direction (the Z direction). A plurality of pillars P, which are sequentially arranged in the first direction (the Y direction) and penetrate the plurality of insulating layers IL in the third direction (the Z direction), are provided on the region of the substrate SUB between two adjacent common source lines CSL. The plurality of pillars P may be in contact with the substrate SUB by penetrating the plurality of insulating layers IL. A surface layer S of each of the plurality of pillars P may include a silicon material doped with an impurity of a first conductivity type and may function as a channel region.

An inner layer I of each of the plurality of pillars P may include an insulating material, such as silicon oxide, or an air gap. A charge storage layer CS may be provided in a region between two adjacent common source lines CSL, along the plurality of insulating layers IL, the plurality of pillars P, and an exposed surface of the substrate SUB. The charge storage layer CS may include a gate insulating layer (or referred to as a "tunneling insulating layer"), a charge trap layer, and a blocking insulating layer. In addition, a gate electrode GE including select lines GSL and SSL and word lines WL1 to WL8 is provided in a region between two adjacent common source lines CSL on the exposed surface of the charge storage layer CS. Drains or drain contacts DR may be respectively provided on the plurality of pillars P. The bit lines BL1 to BL3, which extend in a second direction (an X direction) and are separated from each other by a preset distance in the first direction (the Y direction), may be provided on the drain contacts DR.

As illustrated in FIG. 2B, each of the memory NAND strings NS11 to NS33 may have a structure in which a second memory stack ST2 is stacked on a first memory stack ST1. The first memory stack ST1 may be connected to the common source line CSL, the second memory stack ST2 may be connected to the bit lines BL1 to BL3, and the first memory stack ST1 and the second memory stack ( ST2) share channel holes.

Further referring to FIG. 2C, the nonvolatile memory 131 may have a chip to chip (C2C) structure. In the C2C structure, an upper chip including a cell region CELL is formed on a first wafer, a lower chip including a peripheral circuit region PERI is formed on a second wafer that is different from the first wafer, and then the upper chip is coupled to the lower chip by a bonding method. For example, the bonding method may refer to a method of electrically connecting a bonding metal formed on an uppermost metal layer of the upper chip to a bonding metal formed on an uppermost metal layer of the lower chip. For example, when the bonding metal is formed of copper (Cu), the bonding method may be a Cu-Cu bonding method, and the bonding metal may also include aluminum (Al) or tungsten (W).

Each of the peripheral circuit region PERI and the cell region CELL of the nonvolatile memory 131 may include an external pad bonding region PA, a word line bonding region WLBA, and a bit line bonding region BLBA.

The peripheral circuit region PERI may include a first substrate 210, an interlayer insulating layer 215, a plurality of circuit elements 220a, 220b, and 220c formed on the first substrate 210, first metal layers 230a, 230b, and 230c respectively connected to the plurality of circuit elements 220a, 220b, and 220c, and second metal layers 240a, 240b, and 240c respectively formed on the first metal layers 230a, 230b, and 230c. In one example embodiment, the first metal layers 230a, 230b, and 230c may be formed of tungsten with a relatively high electrical resistivity, and the second metal layers 240a, 240b, and 240c may be formed of copper with a relatively low electrical resistivity.

Although only the first metal layers 230a, 230b, and 230c and the second metal layers 240a, 240b, and 240c are illustrated and described, example embodiments are not limited thereto, and one or more metal layers may be further formed on the second metal layers 240a, 240b, and 240c. At least some of the one or more metal layers formed on the second metal layers 240a, 240b, and 240c may be formed of aluminum with a lower electrical resistivity than copper forming the second metal layers 240a, 240b, and 240c.

The interlayer insulating layer 215 may be on the first substrate 210 to cover the plurality of circuit elements 220a, 220b, and 220c, the first metal layers 230a, 230b, and 230c, and the second metal layers 240a, 240b, and 240c and may include an insulating material, such as silicon oxide or silicon nitride.

Lower bonding metals 271b and 272b may be formed on the second metal layer 240b in the word line bonding region WLBA. In the word line bonding region WLBA, the lower bonding metals 271b and 272b of the peripheral circuit region PERI may be electrically connected to upper bonding metals 371b and 372b in the cell region CELL by a bonding method, and the lower bonding metals 271b and 272b and the upper bonding metals 371b and 372b may be formed of aluminum, copper, tungsten, or so on.

The cell region CELL may provide at least one memory block. The cell region CELL may include a second substrate 310 and a common source line 320. A plurality of word lines 331 to 338 (330) may be stacked on the second substrate 310 in a direction (a Z-axis direction) perpendicular to an upper surface of the second substrate 310. String select lines and a ground select line may be arranged on upper and lower portions of the plurality of word lines 330, and a plurality of word lines 330 may be arranged between the string select lines and the ground select line.

In the bit line bonding region BLBA, a channel structure CH may extend in a direction (the Z-axis direction) perpendicular to an upper surface of the second substrate 310 to penetrate the plurality of word lines 330, the string select lines, and the ground select line. The channel structure CH may include a data storage layer, a channel layer, and a buried insulating layer, and the channel layer may be electrically connected to a first metal layer 350c and a second metal layer 360c. For example, the first metal layer 350c may be a bit line contact, and the second metal layer 360c may be a bit line and may also be referred to as a bit line 360c. In one example embodiment, the bit line 360c may extend in the first direction (the Y-axis direction) parallel to an upper surface of the second substrate 310.

A region where the channel structure CH and the bit line 360c are arranged may be defined as the bit line bonding region BLBA. The bit line 360c may be electrically connected to the circuit elements 220c providing a page buffer 393 in the peripheral circuit region PERI in the bit line bonding region BLBA. For example, the bit line 360c may be connected to upper bonding metals 371c and 372c in the cell region CELL, and the upper bonding metals 371c and 372c may be connected to lower bonding metals 271c and 272c connected to the circuit element 220c of the page buffer 393.

In the word line bonding region WLBA, the plurality of word lines 330 may extend in a second direction (an X-axis direction) perpendicular to the first direction and parallel to the upper surface of the second substrate 310 and may be connected to a plurality of cell contact plugs 341 to 347 (340). The plurality of word lines 330 may be respectively connected to the plurality of cell contact plugs 340 by pads formed by extending at least some of the plurality of word lines 330 in different lengths in the second direction. The first metal layers 350b and the second metal layers 360b may be sequentially connected to upper portions of the plurality of cell contact plugs 340 connected to the plurality of word lines 330. The plurality of cell contact plugs 340 may be connected to the peripheral circuit region PERI through the upper bonding metals 371b and 372b of the cell region CELL and the lower bonding metals 271b and 272b of the peripheral circuit region PERI in the word line bonding region WLBA.

The plurality of cell contact plugs 340 may be electrically connected to the circuit elements 220b providing a row decoder 394 in the peripheral circuit region PERI. In some example embodiments, operating voltages of the circuit elements 220b forming the row decoder 394 may be different from operating voltages of the circuit elements 220c forming the page buffer 393. For example, the operating voltages of the circuit elements 220c forming the page buffer 393 may be higher than the operating voltages of the circuit elements 220b forming the row decoder 394.

Common source line contact plugs 380 may be arranged in an external pad bonding region PA. The common source line contact plugs 380 may be formed of a conductive material, such as metal, metal compound, or polysilicon, and may be electrically connected to the common source line 320. First metal layers 350a and second metal layers 360a may be respectively sequentially stacked on the common source line contact plugs 380. For example, a region where the common source line contact plugs 380, the first metal layers 350a, and the second metal layers 360a are arranged may be defined as the external pad bonding region PA.

In addition, a first input/output pad 205 and a second input/output pad 305 may be arranged in the external pad bonding region PA. A lower insulating layer 201 covering a lower surface of the first substrate 210 may be formed under the first substrate 210, and the first input/output pad 205 may be formed on the lower insulating layer 201. The first input/output pad 205 may be connected to at least one of the plurality of circuit elements 220a, 220b, and 220c arranged in the peripheral circuit region PERI through a first input/output contact plug 203, and may be separated from the first substrate 210 by the lower insulating layer 201. In addition, a side insulating layer may be between the first input/output contact plug 203 and the first substrate 210 to electrically separate the first input/output contact plug 203 from the first substrate 210.

An upper insulating layer 301 covering the upper surface of the second substrate 310 may be formed on the second substrate 310, and the second input/output pad 305 may be on the upper insulating layer 301. The second input/output pad 305 may be connected to at least one of the plurality of circuit elements 220a, 220b, and 220c in the peripheral circuit region PERI through the second input/output contact plug 303. In some example embodiments, the second input/output pad 305 may be electrically connected to the circuit element 220a.

According to an example embodiment, the second substrate 310 and the common source line 320 may not be in a region including the second input/output contact plug 303. In addition, the second input/output pad 305 may not overlap the plurality of word lines 330 in a third direction (the Z-axis direction). The second input/output contact plug 303 may be separated from the second substrate 310 in a direction parallel to the upper surface of the second substrate 310 and penetrate an interlayer insulating layer 315 of the cell region CELL to be connected to the second input/output pad 305.

According to example embodiments, the first input/output pad 205 and the second input/output pad 305 may be optionally formed. For example, the nonvolatile memory 131 may include only the first input/output pad 205 on the first substrate 210 or the second input/output pad 305 on the second substrate 310. Alternatively, the nonvolatile memory 13 1 may include both the first input/output pad 205 and the second input/output pad 305.

A metal pattern of the uppermost metal layer may be provided as a dummy pattern in each of the external pad bonding region PA and the bit line bonding region BLBA respectively included in the cell region CELL and the peripheral circuit region PERI, or there may be no uppermost metal layer.

In the external pad bonding region PA of the nonvolatile memory 131, lower bonding metals 271a and 272a may be formed on the second metal layer 240a, and a lower metal pattern 273a having the same shape as an upper metal pattern 372a of the cell region CELL may be formed on the uppermost metal layer of the peripheral circuit region PERI to correspond to the upper metal pattern 372a formed on the uppermost metal layer of the cell region CELL. The upper metal pattern 372a formed on the uppermost metal layer of the cell region CELL may be connected to a separate contact 371a in the cell region CELL, and the lower metal pattern 273a formed on the uppermost metal layer of the peripheral circuit region PERI may not be connected to a separate contact in the peripheral circuit region PERI. Similarly, in the external pad bonding region PA, an upper metal pattern 372a having the same shape as the lower metal pattern 273a in the peripheral circuit region PERI may also be formed on the upper metal layer of the cell region CELL to correspond to the lower metal pattern 273a formed on the uppermost metal layer of the peripheral circuit region PERI.

The lower bonding metals 271b and 272b may be formed on the second metal layer 240b in the word line bonding region WLBA. In the word line bonding region WLBA, the lower bonding metals 271b and 272b in the peripheral circuit region PERI may be respectively and electrically connected to the upper bonding metals 371b and 372b in the cell region CELL by a bonding method.

In addition, in the bit line bonding region BLBA, an upper metal pattern 392 having the same shape as a lower metal pattern 252 of the peripheral circuit region PERI may be formed on the uppermost metal layer of the cell region CELL to correspond to the lower metal pattern 252 formed on the uppermost metal layer of the peripheral circuit region PERI. Contacts 251 may be formed on the lower metal pattern 252 formed on the uppermost metal layer of the peripheral circuit region PERI, but contacts may not be formed on the upper metal pattern 392 formed on the uppermost metal layer of the cell region CELL.

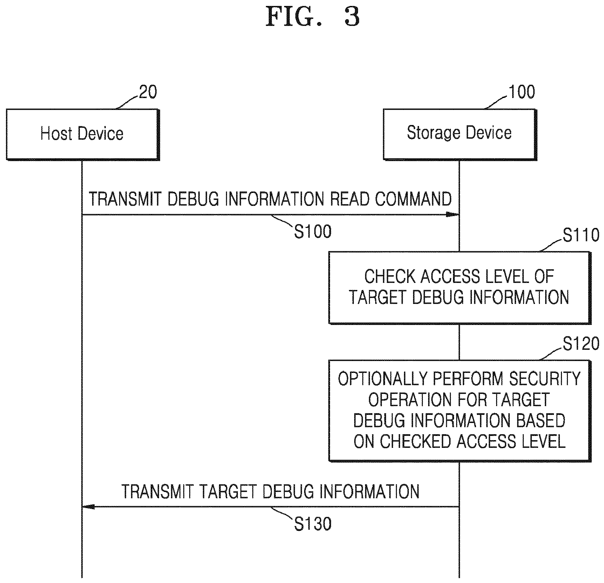

FIG. 3 is a flowchart illustrating an operating method of a storage system, according to an example embodiment. The storage system may include a host device 20 and a storage device 100.

Referring to FIG. 3, in operation S100, the host device 20 may transmit a debug information read command to the storage device 100. The host device 20 may request the storage device 100 to send target debug information of a plurality of pieces of debug information through a debug information read command, when a problem occurs in the storage device 100 or in order to check a state of the storage device 100. A format of the debug information read command may be set in advance, and the host device 20 may transmit a debug information address or a symbol for the target debug information together with the debug information read command to the storage device 100 according to the set format.

In operation S110, the storage device 100 may check an access level of the target debug information requested by the host device 20 in response to the debug information read command. The storage device 100 may recognize the target debug information of the plurality of pieces of debug information based on the debug information address or the symbol for the target debug information. The storage device 100 may check the access level of the target debug information with reference to a management table. For example, the storage device 100 may check the access level of the target debug information by checking an access level mapped to the same address as the debug information address in the management table. In another example, the storage device 100 may check the access level of the target debug information by checking an access level mapped to the same symbol as a symbol of the debug information in the management table.

In operation S 120, the storage device 100 may perform an optional security operation for the target debug information based on the checked access level. For example, the storage device 100 may skip the security operation when the target debug information is set to a first access level. For example, the storage device 100 may perform a security operation when the target debug information is set to a second access level, and the security operation may include an operation of checking whether the host device 20 is successful in authentication of a debug user. For example, the storage device 100 may perform a security operation when the target debug information is set to a third access level, and the security operation may include at least one of an operation of checking whether the host device 20 is successful in authentication of the debug user and an encryption operation of the target debug information.

In operation S130, the storage device 100 may transmit the target debug information to the host device 20. Depending on access levels of the target debug information, the target debug information transmitted in operation S130 may be raw data stored in the storage device 100 or data obtained by encrypting the data stored in the storage device 100.

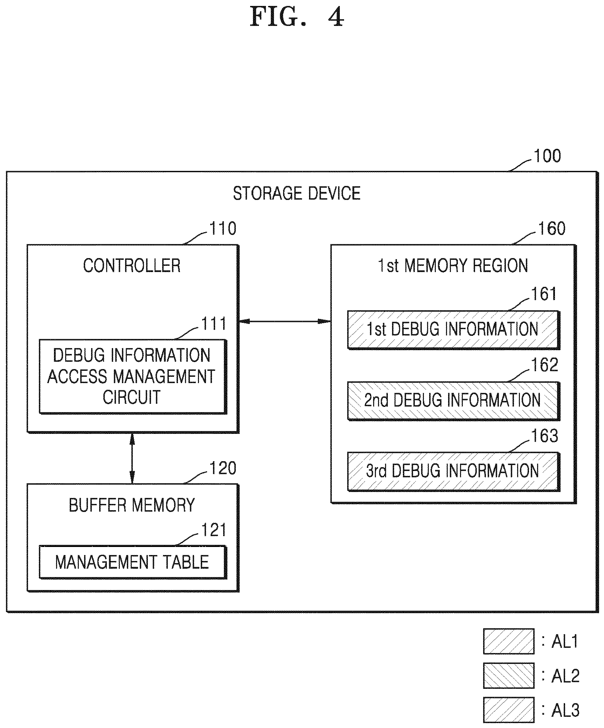

FIG. 4 is a block diagram illustrating the storage device 100 according to an example embodiment. Hereinafter, descriptions previously given with reference to FIG. 1 are omitted.

Referring to FIG. 4, the storage device 100 may include a controller 110, a buffer memory 120, and a first memory region 160. The first memory region 160 may correspond to a physical or logical memory region formed by at least one of the plurality of first memory devices 130 (FIG. 1), the plurality of second memory devices 140 (FIG. 1), and the pieces of IP 150 (FIG. 1). In some example embodiments, the first memory region 160 may correspond to a security memory region.

The first memory region 160 may store first debug information 161, second debug information 162, and third debug information 163. The first debug information 161 to the third debug information 163 may be stored during manufacturing of the storage device 100 or may accumulate whenever the storage device 100 operates.

In an example embodiment, a debug information access management circuit 111 may set the first debug information 161 to a first access level AL1, the second debug information 162 to a second access level AL2, and the third debug information 163 to a third access level AL3. The debug information access management circuit 111 may generate a management table 121 indicating access levels respectively set for the first debug information 161 to the third debug information 163. In some example embodiments, the debug information access management circuit 111 may set the first, second, and third access levels AL1, AL2, and AL3 of the first debug information 161 to the third debug information 163 based on an access level policy defined in firmware executed by the controller 110.

In some example embodiments, the buffer memory 120 may store the management table 121. In some example embodiments, the management table 121 may be stored in at least one of the plurality of first memory devices 130 (FIG. 1), the plurality of second memory devices 140 (FIG. 1), the pieces of IP 150 (FIG. 1), and the management table 121 stored in at least one of the plurality of first memory devices 130 (FIG. 1), the plurality of second memory devices 140 (FIG. 1), and the pieces of IP 150 (FIG. 1) may be loaded into the buffer memory 120.

In some example embodiments, the debug information access management circuit 111 may output the first debug information 161 to the third debug information 163 to the host device 20 (FIG. 1) based on output methods corresponding to the first, second, and third access levels AL1, AL2, and AL3 of the first debug information 161 to the third debug information 163 with reference to the management table 121. An output method of the debug information may be associated with the optional security operation for the debug information described with reference to FIG. 1 and so on. That is, the output method of the debug information may change depending on optional security operations for the debug information.

For example, a first output method corresponding to the first access level AL1 may be a method of outputting the first debug information 161 read from the first memory region 160 to the host device 20 (FIG. 1) as it is. For example, a second output method corresponding to the second access level AL2 may be a method of outputting the second debug information 162 read from the first memory region 160 to the host device 20 (FIG. 1) after debug user authentication for the host device 20 (FIG. 1) is performed. For example, a third output method corresponding to the third access level AL3 may be a method of outputting third debug information encrypted by performing an encryption operation of the third debug information 163 read from the first memory region 160 to the host device 20 (FIG. 1) after debug user authentication of the host device 20 (FIG. 1) is performed.

FIGS. 5A and 5B are diagrams illustrating implementation examples of the management tables 121. In the following, FIG. 4 may be further referred to and described for better understanding.

Referring to FIG. 5A, management table 121a, an example of the management table 121, may include a start address field and an end address field indicating addresses respectively indicating locations where the first debug information 161 to the third debug information 163 are stored, and an access level field indicating access levels of the first debug information 161 to the third debug information 163.

For example, a first start address S_ADD1 and a first end address E_ADD1 indicating a location of the first memory region 160 in which the first debug information 161 is stored may be mapped to the first access level AL1 and may indicate that the debug information 161 is set to the first access level AL1. A second start address S_ADD2 and a second end address E_ADD2 indicating a location of the first memory region 160 in which the second debug information 162 is stored may be mapped to the second access level AL2 and may indicate that the second debug information 162 is set to the second access level AL2. A third start address S_ADD3 and a third end address E_ADD3 indicating a location of the first memory region 160 in which the third debug information 163 is stored may be mapped to the third access level AL3 and may indicate that the third debug information 163 is set to the third access level AL3.

Referring further to FIG. 5B, management table 121b, an example of the management table 121, may include a symbol field indicating first debug information 161 to third debug information 163 and an access level field indicating an access level.

For example, a first symbol SB1 indicating the first debug information 161 may be mapped to the first access level AL1 and may indicate that the first debug information 161 is set to the first access level AL1. A second symbol SB2 indicating the second debug information 162 may be mapped to the second access level AL2 and may indicate that the second debug information 162 is set to the second access level AL2. A third symbol SB3 indicating the third debug information 163 may be mapped to the third access level AL3 and may indicate that the third debug information 163 is set to the third access level AL3.

However, the management tables 121a and 121b of FIGS. 5A and 5B are only examples and example embodiments are not limited thereto. For example, management tables may include fields suitable for formats of debug information read commands or the type of signals received therewith.

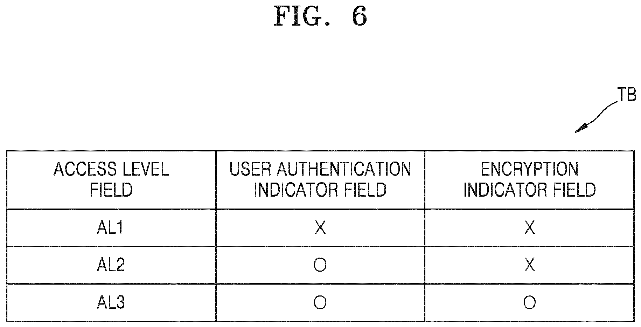

FIG. 6 is a diagram illustrating a table TB in which optional security operations according to the first, second, and third access levels AL1, AL2, and AL3 of FIG. 4 are arranged. In the following, FIG. 4 is further referred to and described for better understanding.

Referring to FIG. 6, the table TB may include an access level field indicating an access level, a user authentication indicator field indicating whether a debug user authentication operation is performed, and an encryption indicator field indicating whether an encryption operation of debug information is performed.

For example, the debug information access management circuit 111 may skip a security operation including a debug user authentication operation and an encryption operation before outputting the first debug information 161 that is set to the first access level AL1 to the host device. The debug information access management circuit 111 may perform the security operation including a debug user authentication operation before outputting the second debug information 162 that is set to the second access level AL2 to the host device. The debug information access management circuit 111 may perform the security operation including the debug user authentication operation and the encryption operation before outputting the third debug information 163 that is set to the third access level AL3 to the host device.

That is, the debug information access management circuit 111 may increase a security level of the debug information with high importance by sequentially adding the debug user authentication operation and the encryption operation as the access level of the debug information increases, and also easily and quickly provide debug information with relatively low importance to the host device.

FIG. 7A is a block diagram illustrating a storage device 100' according to an example embodiment, and FIG. 7B is a diagram illustrating a table TB' in which optional security operations according to the first access level AL1 to the fourth access level AL4 of FIG. 7A are arranged. Hereinafter, descriptions previously given with reference to FIGS. 4 and 6 are omitted.

Referring to FIG. 7A, the storage device 100' may include a controller 110', a buffer memory 120', and a first memory region 161'.

The first memory region 161' may store first debug information 161 to fourth debug information 164. The first debug information 161 to the fourth debug information 164 may be stored during manufacturing of the storage device 100' or may accumulate whenever the storage device 100' operates.

In an example embodiment, the debug information access management circuit 111' may set the first debug information 161 to the first access level AL1, and the second debug information 162 to the second access level AL2, the third debug information 163 to the third access level AL3, and the fourth debug information 164 to the fourth access level AL4. The debug information access management circuit 111' may generate a management table 121' indicating access levels respectively set for the first debug information 161 to the fourth debug information 164. In some example embodiments, the debug information access management circuit 111' may set the first access level AL1 to the fourth access level AL4 of the first debug information 161 to the fourth debug information 164 based on an access level policy defined in firmware executed by the controller 110'. For example, the fourth debug information 164 may require a higher security level than the third debug information 163, and the fourth debug information 164 may be set to the fourth access level AL4.

In some example embodiments, the buffer memory 120' may store the management table 121'.

In some example embodiments, the debug information access management circuit 111' may output the first debug information 161 to the fourth debug information 164 to the host device 20 (FIG. 1) based on output methods respectively corresponding to the first access level AL1 to the fourth access level AL4 of the first debug information 161 to the fourth debug information 164 with reference to the management table 121'.

For example, a fourth output method corresponding to the fourth access level AL4 may be a method of outputting, to the host device 20 (FIG. 1), a signal indicating that the fourth debug information 164 stored in the first memory region 160 may not be accessed. Specifically, in response to a request for the fourth debug information 164 from the host device 20 (FIG. 1), the debug information access management circuit 111' may check that an access level of the fourth debug information 164 is the fourth access level AL4, and then may transmit, to the host device 20 (FIG. 1), a signal indicating that the fourth debug information 164 may not be accessed.

Referring further to FIG. 7B, the table TB' may include an access level field indicating an access level, a user authentication indicator field indicating whether a debug user authentication operation is performed, an encryption indicator field indicating whether an encryption operation of debug information is performed, and an inaccessible indicator field indicating whether access is impossible.

For example, the debug information access management circuit 111 may generate a signal indicating that access is impossible and provide the signal to the host device 20 (FIG. 1) in response to a request for the fourth debug information 164 that is set to the fourth access level AL4 from the host device 20 (FIG. 1).

That is, the debug information access management circuit 111 may prevent the host device 20 (FIG. 1) from accessing the fourth debug information 164 that is set to the fourth access level AL4 with the highest security level.

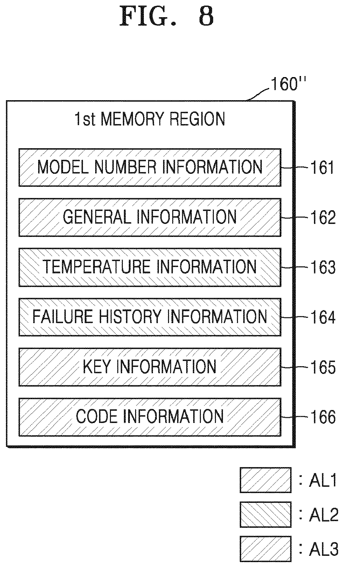

FIG. 8 is a diagram illustrating a plurality of pieces of debug information stored in a first memory region 160" according to an example embodiment.

Referring to FIG. 8, the first memory region 160" may include model number information 161 of a storage device, general information 162, temperature information 163 of the storage device, failure history information 164 on operations of the storage device, key information 165 on at least one security function supported by the storage device, and code information 166 on firmware executed by the storage device.

For example, the model number information 161 may be stored when the storage device is manufactured and may be set to the first access level AL1.

For example, the general information 162 may be generally used for troubleshooting a storage device and may be set to the first access level AL1.

For example, the temperature information 163 may be generated based on an internal temperature measured when the storage device performs an operation. In some example embodiments, the temperature information 163 may be updated periodically or non-periodically as the storage device performs an operation. The temperature information 163 may include information on internal temperatures measured for each of various operations performed by the storage device. The temperature information 163 is important information for checking whether a lot of heat is generated when the storage device performs any operation, and accordingly, the temperature information 163 may be set to the second access level AL2.

For example, the failure history information 164 may be generated by monitoring failed cases in operation of at least one of the plurality of first memory devices 130 (FIG. 1), the plurality of second memory devices 140 (FIG. 1), and the pieces of IP 150 (FIG. 1) of the storage device. In some example embodiments, the failure history information 164 may further include information generated by monitoring failed cases in various operations of the storage device. Because the failure history information 164 is important information for checking a high probability of failure when a storage device performs any operation, the failure history information 164 may be set to the second access level AL2.

For example, the key information 165 may include at least one security key required for at least one security function supported by the storage device. For example, the storage device may support a replay protected memory block (RPMB) function to defend against a replay attack, and in this case, the key information 165 may include an RPMB key. Because the key information 165 is very important information including a main security key of a security function supported by the storage device, the key information 165 may be set to the third access level AL3.

For example, the code information 166 may include code for firmware (or firmware code) executed by a controller of the storage device. Because the code information 166 is very important information including the firmware code that is fundamental to an operation of the storage device, the code information 166 may be set to the third access level AL3.

However, the pieces of debug information 161, 162, 163, 164, 165, and 166 in FIG. 8 are only an example, and example embodiments are not limited thereto, and more various pieces of debug information may be stored in the first memory region 160". In addition, the plurality of pieces of debug information 161, 162, 163, 164, 165, and 166 each set to any one of the first access level AL1 to the third access level AL3 are only an example, and example embodiments are not limited thereto, and more access levels may be defined, or fewer access levels may be defined, and the plurality of pieces of debug information 161, 162, 163, 164, 165, and 166 may be variously set to one of the defined access levels.

FIG. 9 is a block diagram illustrating a storage device 100" according to an example embodiment. FIG. 9 illustrates only blocks of the storage device 100" required to describe the example embodiment.

Referring to FIG. 9, the storage device 100" may include a debug information access management circuit 111 and a second memory region 170.

In some example embodiments, the debug information access management circuit 111 may include a debug user authentication circuit 111_1 and a debug information encryption circuit 111_2. In some example embodiments, the second memory region 170 may store a debug user authentication key 171, a debug user authentication flag 172, a nonce 173, and a debug encryption key 174. A plurality of pieces of information 171, 172, 173, and 174 stored in the second memory region 170 may be referred to as a plurality of pieces of security information. The second memory region 170 may be a physical or logical memory region formed by at least one of the plurality of first memory device 130 (FIG. 1), the plurality of second memory device 140 (FIG. 1), and the pieces of IP 150 (FIG. 1). In some example embodiments, the second memory region 170 may be physically or logically separated from the first memory region 160 described above with reference to FIG. 4.

In an example embodiment, the nonce 173 may be used when the debug user authentication key 171 and the debug encryption key 174 are generated and may be stored in the second memory region 170 together with the debug user authentication key 171 and the debug encryption key 174.

In some example embodiments, the debug user authentication circuit 111_1 may perform a debug user authentication operation in association with the host device 20 (FIG. 1 ) in advance based on the debug user authentication key 171. Specifically, the host device 20 (FIG. 1) may request debug user authentication to the debug user authentication circuit 111_1 before transmitting a debug information read command for accessing a plurality of pieces of debug information stored in the storage device 100". The debug user authentication circuit 111_1 may perform a debug user authentication operation in response to a request for the debug user authentication from the host device 20 (FIG. 1).

In some example embodiments, the debug user authentication circuit 111_1 may store a result of the debug user authentication operation associated with the host device 20 (FIG. 1) in the debug user authentication flag 172. Specifically, when the debug user authentication operation is successful, the debug user authentication circuit 111_1 may store a first value indicating successful authentication in the debug user authentication flag 172. In addition, when the debug user authentication operation fails, the debug user authentication circuit 111_1 may store a second value indicating authentication failure in the debug user authentication flag 172. In some example embodiments, the debug user authentication flag 172 may be initialized when a preset condition is satisfied, and when the debug user authentication flag 172 is initialized, the debug user authentication circuit 111_1 may inform the host device 20 (FIG. 1) that the debug user authentication flag 172 is initialized. Thereafter, the host device 20 (FIG. 1) may request the debug user authentication again to the debug user authentication circuit 111_1. For example, the debug user authentication flag 172 may be initialized when the storage device 100" is powered off or when a preset time elapses.

In some example embodiments, the debug user authentication operation may be based on any one of various authentication algorithms. Specifically, the debug user authentication operation may be based on a hash-based message authentication code (HMAC) method. Details thereof will be described below with reference to FIG. 10.

In some example embodiments, the debug information encryption circuit 111_2 may perform an encryption operation for the debug information based on the debug encryption key 174. In some example embodiments, the cryptographic operation may be based on any one of various encryption algorithms. Specifically, the encryption operation may be based on an advanced encryption standard (AES) method. Details thereof will be described below with reference to FIG. 11.

As described above, the debug user authentication operation of the debug user authentication circuit 111_1 may be to manage access to the debug information set to the second or third access level, and the encryption operation of the debug information encryption circuit 111_2 may be to manage access to the debug information set to the third access level.

Although FIG. 9 illustrates that the debug user authentication circuit 111_1 is separated from the debug information encryption circuit 111_2 to independently operate for better understanding, this is only an example, and example embodiments are not limited thereto, and operations of the two circuits may be understood as an operation of the debug information access management circuit 111 or an operation of the controller.

FIG. 10 is a flowchart illustrating a debug user authentication operation of a storage system according to an example embodiment. The storage system may include a host device 20 and a storage device 100.

The host device 20 may request periodically or non-periodically debug user authentication to the storage device 100 before transmitting a debug information read command to the storage device 100. For example, the host device 20 may first request the debug user authentication to the storage device 100 before transmitting a debug information read command to the storage device 100. For example, the host device 20 may perform a debug user authentication operation in association with the storage device 100, and after authentication is successful and when a preset effective time elapses, the host device 20 may request the debug user authentication to the storage device 100. For example, the host device 20 may request the debug user authentication to the storage device 100 when receiving a signal indicating that the debug user authentication is required from the storage device 100. This is only an example, and example embodiments are not limited thereto, and the host device 20 may request debug user authentication to the storage device 100 in various situations.

Referring to FIG. 10, in operation S200, the host device 20 may request a nonce for debug user authentication to the storage device 100.

In operation S210, the storage device 100 may generate the nonce in response to the request from the host device 20. In some example embodiments, the storage device 100 may further include a random number generator, and the nonce may be generated by the random number generator.

In operation S220, the storage device 100 may transmit the generated nonce to the host device 20.

In operation S230, the storage device 100 may generate a first HMAC by using the generated nonce. In some example embodiments, the storage device 100 may generate the first HMAC by using the generated nonce, the debug user authentication key 171 (FIG. 9), and a hash function.

In operation S240, the host device 20 may generate a second HMAC by using the received nonce. In some example embodiments, the host device 20 may generate the second HMAC by using an authentication key stored in the host device 20, the received nonce, and the hash function.

In operation S250, the host device 20 may transmit the generated second HMAC to the storage device 100.

In operation S260, the storage device 100 may perform the debug user authentication by comparing the first HMAC with the second HMAC. In some example embodiments, the storage device 100 may determine that authentication is successful when the first HMAC is the same as the second HMAC, and may determine the authentication fails when the first MHAC is different from the second HMAC.

In operation S270, the storage device 100 may store a result of the debug user authentication of operation S260 in a flag. The flag may be referred to as a debug user authentication flag. Thereafter, the storage device 100 may quickly check whether the host device 20 completes the authentication with reference to the debug user authentication flag.

FIG. 11 is a block diagram illustrating a debug information encryption circuit 111_2 according to an example embodiment.

Referring to FIG. 11, the debug information encryption circuit 111_2 may include a block cipher 111_21. In some example embodiments, the block cipher 111_21 may encrypt the read debug information D_INFO in a preset block unit by using a debug encryption key D_E_KEY and output the encrypted debug information D _INFO'. The encrypted debug information D_INFO' may be provided to the host device 20 (FIG. 1).

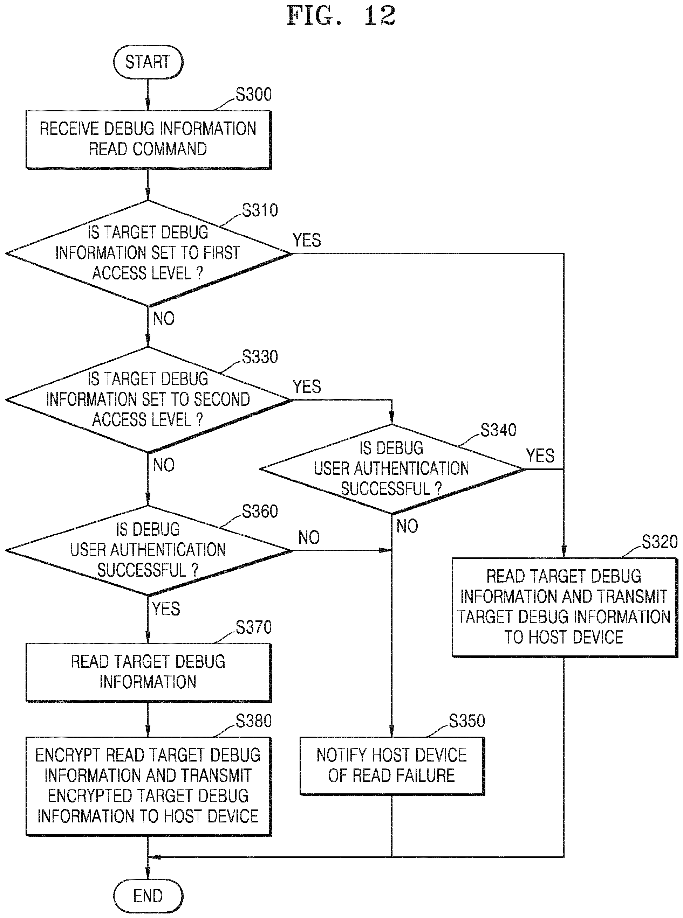

FIG. 12 is a flowchart illustrating an operating method of a storage device, according to an example embodiment. Hereinafter, it is assumed that target debug information is set to one of the first access level to third access level.

Referring to FIG. 12, in operation S300, the storage device may receive a debug information read command from a host device. The host device may transmit the debug information read command to the storage device to request the target debug information from the storage device.

In operation S310, the storage device may determine whether the target debug information is set to the first access level.

When an answer of operation S310 is "YES", the storage device may read the read target debug information set to the first access level from a first memory region and transmit the target debug information to the host device in operation S320.

When an answer of operation S310 is "NO", the storage device may determine whether the target debug information is set to the second access level in operation S330.

When an answer of operation S330 is "YES", the storage device may determine whether the host device is successful in debug user authentication in operation S340. In some example embodiments, the storage device may determine whether the debug user authentication is successful with reference to a debug user authentication flag in which a result of a debug user authentication operation performed before operation S300 is stored.

When an answer of operation S340 is "YES", the storage device may read the target debug information set to the second access level from the first memory region and transmit the target debug information to the host device in operation S320.

When an answer of operation S340 is "NO", the storage device may notify the host device of failure (or inaccessibility to target debug information) to read the target debug information set to the second access level in operation S350. In some example embodiments, the host device may request debug user authentication again to the storage device in response to the notification of operation S350.

When an answer of operation S330 is "NO", the storage device may check that the target debug information is set to the third access level, and in operation S360, the storage device may determine whether the host device is successful in debug user authentication. In some example embodiments, the storage device may determine whether the debug user authentication is successful with reference to a debug user authentication flag in which a result of a debug user authentication operation performed before operation S300 is stored.

When an answer of operation S360 is "NO", the storage device may notify the host device of failure to read the target debug information set to the third access level in operation S350.

When an answer of operation S360 is "YES", the storage device may read the target debug information set to the third access level from the first memory region in operation S370.

In operation S380, the storage device may encrypt the read target debug information and transmit the encrypted target debug information to the host device.

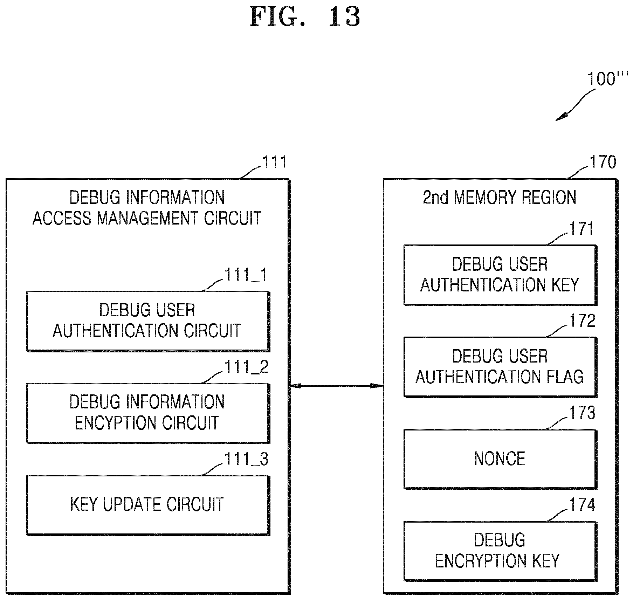

FIG. 13 is a block diagram illustrating a storage device 100‴ according to an example embodiment. FIG. 13 illustrates only blocks of the storage device 100‴ required to illustrate the example embodiment. Hereinafter, descriptions previously given with reference to FIG. 9 are omitted.

Referring to FIG. 13, the storage device 100‴ may include a debug information access management circuit 111 and a second memory region 170.

In some example embodiments, the debug information access management circuit 111 may further include a key update circuit 111_3.

In some example embodiments, the key update circuit 111_3 may update a debug user authentication key 171 and a debug encryption key 174. Specifically, the key update circuit 111_3 may newly generate a nonce 173 in response to a debug key update request from the host device 20 (FIG. 1) and may perform an update operation by newly generating the debug user authentication key 171 and the debug encryption key 174 by using the generated nonce 173 and storing the newly generated debug user authentication key 171 and the newly generated debug encryption key 174 in the second memory region 170 . The newly generated nonce 173 may be stored in the second memory region 170.

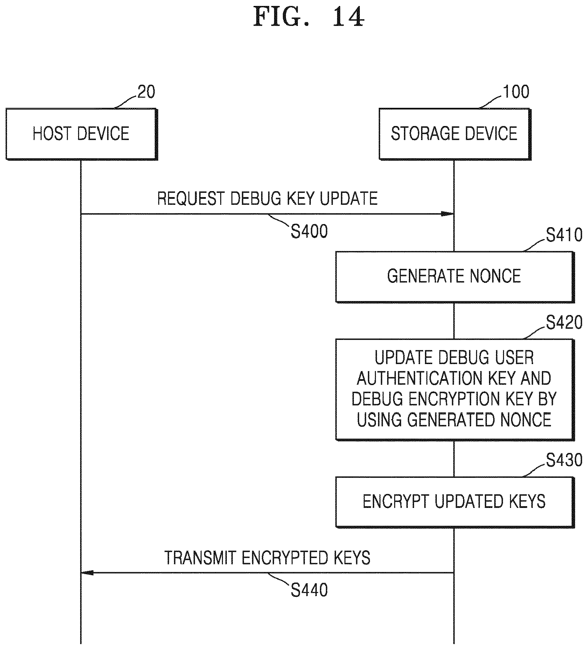

FIG. 14 is a flowchart illustrating a key update operation of a storage system according to an example embodiment. The storage system may include a host device 20 and a storage device 100.

Referring to FIG. 14, in operation S400, the host device 20 may request a debug key update to the storage device 100.

In operation S410, the storage device 100 may newly generate a nonce.

In operation S420, the storage device 100 may update a debug user authentication key and a debug encryption key by using the generated nonce.

In operation S430, the storage device 100 may encrypt the debug user authentication key and the debug encryption key which are updated in operation S420.

In operation S440, the storage device 100 may transmit the encrypted debug user authentication key and the encrypted debug encryption key to the host device 20. In some example embodiments, the host device 20 may decrypt the encrypted debug user authentication key and the encrypted debug encryption key and store the decrypted debug user authentication key and the decrypted debug encryption key. The host device 20 may perform a debug user authentication operation in association with the storage device 100 by using the stored debug user authentication key and the stored debug encryption key or may decrypt the encrypted debug information received from the storage device 100.

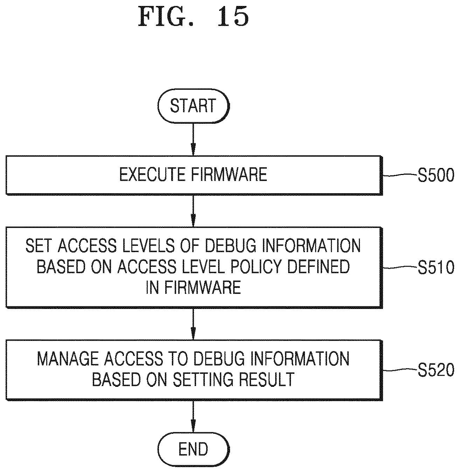

FIG. 15 is a flowchart illustrating an operating method of a storage device according to an example embodiment.

Referring to FIG. 15, in operation S500, the storage device may execute firmware. The firmware may be to drive the storage device.

In operation S510, the storage device may set an access level of each piece of debug information based on an access level policy defined in the firmware.

In operation S520, the storage device may manage access to the debug information from a host device based on the setting result. In some example embodiments, the storage device may perform an optional security operation based on an access level of target debug information requested from the host device.

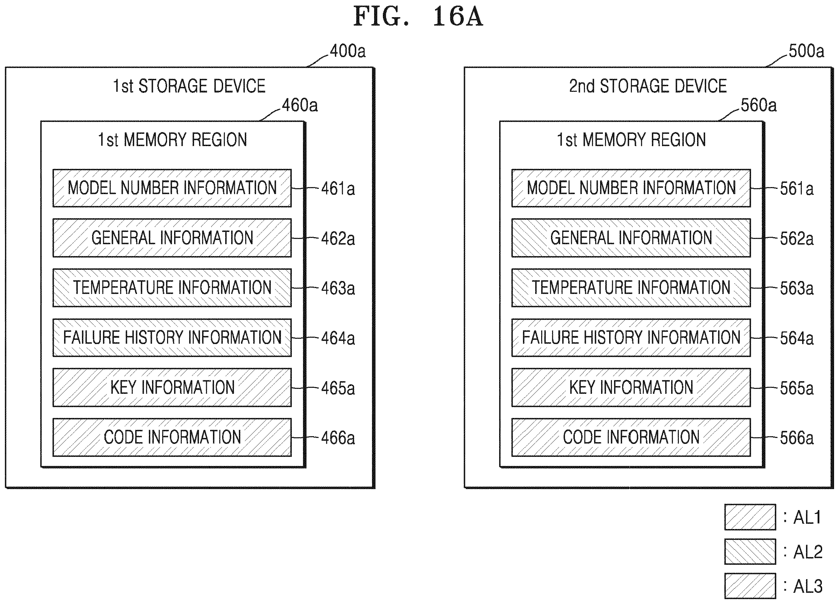

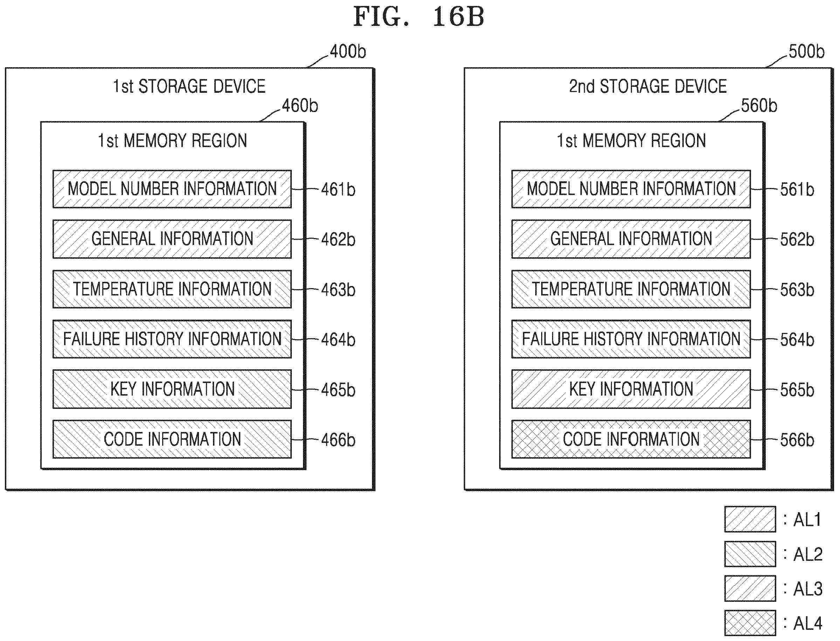

FIGS. 16A and 16B are diagrams illustrating examples of setting an access level for debug information of first storage devices 400a and 400b and second storage devices 500a and 500b according to example embodiments. It is assumed that access level policies defined in firmware of the first storage devices 400a and 400b and the second storage devices 500a and 500b are different.

Referring to FIG. 16A, the first storage device 400a may include a first memory region 460a, and the first memory region 460a may include model number information 461a of the first storage device 400a, general information 462a, temperature information 463a of the first storage device 400a, failure history information 464a on an operation of the first storage device 400a, key information 465a on at least one security function supported by the first storage device 400a, and code information 466a on firmware executed in the first storage device 400a.

The second storage device 500a may include a first memory region 560a, and the first memory region 560a may include model number information 561a of the second storage device 500a, general information 562a, temperature information 563a of the second storage device 500a, failure history information 564a on an operation of the second storage device 500a, key information 565a on at least one security function supported by the second storage device 500a, and code information 566a on firmware executed by the second storage device 500a.

In some example embodiments, the first storage device 400a may set the model number information 461a and the general information 462a to a first access level AL1, the temperature information 463a and the failure history information 464a to a second access level AL2, and the key information 465a and the code information 466a to a third access level AL3.

In an example embodiment, the second storage device 500a may set the model number information 561a to the first access level AL1, the general information 562a and the temperature information 563a to the second access level AL2, and the failure history information 564a, the key information 565a, and the code information 566a to the third access level AL3.

Referring further to FIG. 16B, the first storage device 400b may set model number information 461b and general information 462b to the first access level AL1, and may set temperature information 463b, failure history information 464b, key information 465b, and code information 466b to the second access level AL2.

The second storage device 500b may set model number information 561b and general information 562b to the first access level AL1, temperature information 563b and failure history information 564b to the second access level AL2, key information 565b to the third access level AL3, and code information 566b to a fourth access level AL4.

However, FIGS. 16A and 16B are only examples, and example embodiments are not limited thereto, and a plurality of pieces of debug information may be variously set to one of more or less access levels.

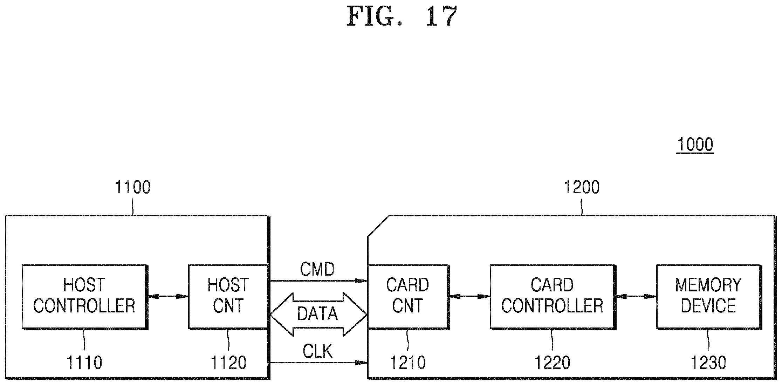

FIG. 17 is a block diagram illustrating a memory card system 1000 according to an example embodiment.

Referring to FIG. 17, the memory card system 1000 may include a host device 1100 and a memory card 1200. The host device 1100 may include a host controller 1110 and a host connector 1120. The memory card 1200 may include a card connector 1210, a card controller 1220 and a memory device 1230. The memory device 1230 may store a plurality of pieces of debug information, and each of the plurality of pieces of debug information may be set to one of a plurality of access levels. The memory card 1200 may perform the operations according to example embodiments described with reference to FIG. 1 and so on in response to a debug information read command received from the host device 1100.

The memory card 1200 may communicate with the host device 1100 through at least one of various interface protocols, such as an advanced technology attachment (ATA) interface, a serial ATA (SATA) interface, an external SATA (e-SATA) interface, a parallel ATA (PATA) interface, a small computer system interface (SCSI), serial attached SCSI (SAS), a peripheral component interconnect (PCI) interface, a PCI express (PCIe) interface, IEEE 1394, a Universal Serial Bus (USB) interface, enhanced small device interface (ESDI), an integrated device electronics (IDE) interface, a secure digital (SD) card interface, a multimedia card (MMC) interface, an embedded MMC (eMMC) interface, a universal flash storage (UFS) interface, and a compact flash (CF) card interface.

The host device 1100 may write data to the memory card 1200 or read data stored in the memory card 1200. The host controller 1110 may transmit a command CMD, a clock signal CLK generated by a clock generator in the host device 1100, and data DATA to the memory card 1200 through the host connector 1120.

The card controller 1220 may store data in the memory device 1230 in synchronization with a clock signal generated by a clock generator in the card controller 1220 in response to a command received through the card connector 1210.

In some example embodiments, the card controller 1220 may check an access level of target debug information when the received command is a debug information read command, and perform an optional security operation based on the checked access level. The card controller 1220 may transmit the target debug information read from the memory device 1230 to the host device 1100 based on the optional security operation.

The memory card 1200 may include, for example, a compact flash card, a micro-drive card, a smart media card, a multimedia card, a security digital card, a memory stick, and a USB flash memory driver, and so on.

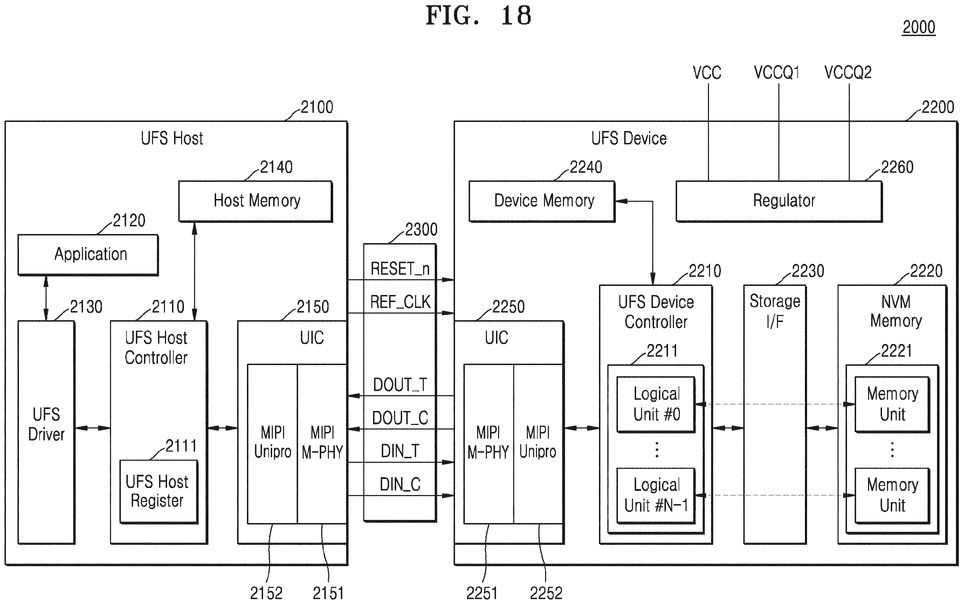

FIG. 18 is a schematic block diagram of a UFS system 2000 according to an example embodiment. The UFS system 2000 may conform to a UFS standard defined by the joint electron device engineering council (JEDEC) and include a UFS host 2100, a UFS device 2200, and a UFS interface 2300. The descriptions of the host device 20 and the storage device 100 previously given with reference to FIG. 1 and so on may also be applied to the UFS system 2000 within the scope that does not conflict with descriptions of FIG. 18. That is, the UFS host 2100 may include at least some components of the host device 20 of FIG. 1, and the UFS device 2200 may include at least some components of the storage device 100 of FIG. 1.

In some example embodiments, the LTFS device 2200 may perform an operation according to example embodiments described with reference to FIG. 1 and so on in response to a debug information read command received from the LTFS host 2100.

Referring to FIG. 18, the UFS host 2100 may be connected to the UFS device 2200 through the UFS interface 2300. The UFS host 2100 may include a UFS host controller 2110, an application 2120, a UFS driver 2130, a host memory 2140, and a UFS interconnect (UIC) layer 2150. The UFS device 2200 may include a UFS device controller 2210, a nonvolatile memory 2220, a storage interface 2230, a device memory 2240, a UIC layer 2250, and a regulator 2260. The nonvolatile memory 2220 may be composed of a plurality of memory units 2221, and the plurality of memory units 2221 may each include a V-NAND flash memory having a two-dimensional (2D) structure or a 3D structure but may also include another type of nonvolatile memory, such as PRAM and/or RRAM. The UFS device controller 2210 may be connected to the nonvolatile memory 2220 through the storage interface 2230. The storage interface 2230 may be implemented to conform to a standard protocol, such as Toggle or ONFI.

The application 2120 may indicate a program that is desired to communicate with the UFS device 2200 to use functions of the UFS device 2200. The application 2120 may transmit an input-output request to the UFS driver 2130 for input/output of the UFS device 2200. The input/output request may refer to a data read request, a data write request, and/or a data erase (or discard) request but is not limited thereto.

The UFS driver 2130 may manage the UFS host controller 2110 through a LTFS-host controller interface (HCI). The UFS driver 2130 may convert an input/output request generated by the application 2120 into a UFS command defined by the UFS standard and transmit the converted UFS command to the UFS host controller 2110. One I/O request may be converted into multiple UFS commands. The UFS command may be basically defined by an SCSI standard but may also be a command dedicated to the UFS standard.

The UFS host controller 2110 may transmit the UFS command converted by the UFS driver 2130 to the UIC layer 2250 of the UFS device 2200 through the UIC layer 2150 and the UFS interface 2300. In this process, a UFS host register 2111 of the UFS host controller 2110 may serve as a command queue (CQ).

The UIC layer 2150 of the UFS host 2100 may include MIPI M-PHY 2151 and MIPI UniPro 2152, and the UIC layer 2250 of the UFS device 2200 may also include the MIPI M-PHY 2251 and the MIPI UniPro 2252.

The UFS interface 2300 may include a line for transmitting a reference clock REF_CLK, a line for transmitting a hardware reset signal RESET_n to the UFS device 2200, a pair of lines for transmitting a pair of differential input signals DIN_t and DIN_c, and a pair of lines for transmitting a pair of differential output signals DOUT_t and DOUT_c.

A frequency value of a reference clock provided from the UFS host 2100 to the UFS device 2200 may be one of four values of 19.2 MHz, 26 MHz, 38.4 MHz, and 52 MHz but is not limited thereto. The UFS host 2100 may change the frequency value of the reference clock even during operation, that is, while data is transmitted and received between the UFS host 2100 and the UFS device 2200. The UFS device 2200 may generate clocks of various frequencies from the reference clock provided from the UFS host 2100 by using a phase-locked loop (PLL) or so on. In addition, the UFS host 2100 may also set a value of a data rate between the UFS host 2100 and the UFS device 2200 through the frequency value of the reference clock. That is, the value of the data rate may be determined according to the frequency value of the reference clock.

The UFS interface 2300 may support multiple lanes, and each lane may be implemented by a differential pair. For example, the UFS interface 2300 may include one or more reception lanes and one or more transmission lanes.

The reception lane and the transmission lane may transmit data in a serial communication manner, and full-duplex communication between the UFS host 2100 and the UFS device 2200 may be made due to a structure in which the reception lane is separated from the transmission lane. That is, the UFS device 2200 may transmit data to the UFS host 2100 through the transmission lane while receiving data from the UFS host 2100 through the reception lane. In addition, control data, such as a command, from the UFS host 2100 to the UFS device 2200, and user data, which is desired to be stored in the nonvolatile memory 2220 of the UFS device 2200 by the UFS host 2100 or to be read from the nonvolatile memory 2220, may be transmitted through the same lane. Accordingly, there is no need to further provide a separate lane for data transmission, other than a pair of reception lanes and a pair of transmission lanes, between the UFS host 2100 and the UFS device 2200.

The UFS device controller 2210 of the UFS device 2200 may control all operations of the UFS device 2200. The UFS device controller 2210 may manage the nonvolatile memory 2220 through logical units (LUs) 2211 that is a logical data storage unit. The number of LUs 2211 may be 8 but is not limited thereto.

The UFS device controller 2210 may include a flash translation layer (FTL) and may convert a logical data address transmitted from the UFS host 2100, for example, a logical page number (LPN) or a logical block address (LBA), into a physical data address, for example, a physical page number (PPN) or a physical block address (PBA) by using address mapping information of the FTL.

When a command from the UFS host 2100 is input to the UFS device 2200 through the UIC layer 2250, the LTFS device controller 2210 may perform an operation according to the input command, and when the operation is completed, the UFS device controller 2210 may transmit a completion response to the UFS host 2100.

For example, when the UFS host 2100 intends to store user data in the UFS device 2200, the UFS host 2100 may transmit a data storage command to the UFS device 2200. When receiving a response indicating that the user data is ready to be transmitted (ready-to-transfer) from the UFS device 2200, the UFS host 2100 may transmit the user data to the UFS device 2200. The UFS device controller 2210 may temporarily store the transmitted user data in the device memory 2240, and may store the user data temporarily stored in the device memory 2240 at a selected location of the nonvolatile memory 2220 based on the address mapping information of the FTL.

In another example, when the UFS host 2100 intends to read user data stored in the UFS device 2200, the UFS host 2100 may transmit a data read command to the UFS device 2200. When receiving the data read command, the UFS device controller 2210 may read the user data from the nonvolatile memory 2220 based on the data read command and temporarily store the read user data in the device memory 2240. In this reading process, the UFS device controller 2210 may detect and correct an error in the read user data by using a built-in error correction code (ECC) engine. More specifically, the ECC engine may generate parity bits for write data to be written to the nonvolatile memory 2220, and the parity bits generated in this way may be included in the nonvolatile memory 2220 together with the write data. When data is read from the nonvolatile memory 2220, the ECC engine may correct an error in the read data by using the read data and the read parity bits from the nonvolatile memory 2220 and output the read data of which error is corrected.

In addition, the UFS device controller 2210 may transmit the user data temporarily stored in the device memory 2240 to the UFS host 2100. In addition, the UFS device controller 2210 may further include an advanced encryption standard (AES) engine. The AES engine may perform at least one of an encryption operation and a decryption operation for data input to the UFS device controller 2210 by using a symmetric-key algorithm.

The UFS host 2100 may sequentially store commands to be transmitted to the UFS device 2200 in the UFS host register 2111 which may function as a command queue, and sequentially transmit the commands to the UFS device 2200. In this case, even when the previously transmitted command is still processed by the UFS device 2200, that is, even before receiving a notification indicating that processing of the previously transmitted command is completed by the UFS device 2200, the UFS host 2100 may transmit the next command waiting in the command queue to the UFS device 2200, and accordingly, the UFS device 2200 may also receive the next command from the UFS host 2100 while processing the previously transmitted command. The largest number of commands (queue depth) that may be stored in the command queue may be, for example, 32. In addition, the command queue may be implemented as a circular queue type that indicates the beginning and the end of a command sequence stored in the command queue through a head pointer and a tail pointer.

Each of the plurality of memory units 2221 may include a memory cell array and a control circuit that controls an operation of the memory cell array. The memory cell array may include a 2D memory cell array or a 3D memory cell array. The memory cell array may include a plurality of memory cells, and each of the memory cells may be a single level cell (SLC) which stores 1 bit of information but may also be a cell, which stores 2 bits or more of information, such as a multi-level cell (MLC), a triple level cell (TLC), or a quadruple level cell (QLC). The 3D memory cell array may include vertical NAND strings, which are vertically oriented, such that at least one memory cell is on another memory cell.

A voltages VCC, a voltage VCCQ, a voltage VCCQ2, and so on may be input to the UFS device 2200 as power supply voltages. The voltage VCC may be a main power supply voltage for the UFS device 2200 and may have a value of about 2.4 to about 3.6V. The voltage VCCQ may be a power supply voltage for supplying a low voltage and may be used mainly for the UFS device controller 2210, and may have a value of about 1.14 V to about 1.26 V. The voltage VCCQ2 may be a power supply voltage for supplying a voltage that is lower than the voltage VCC and higher than the voltage VCCQ and may be used mainly for an input/output interface, such as the MIPI M-PHY 2251, and may have a value of about 1.7 V to about 1.95 V. The power supply voltages may be supplied to respective components of the UFS device 2200 through the regulator 2260. The regulator 2260 may be implemented by a set of unit regulators respectively connected to different power supply voltages among the power supply voltages described above.

In some example embodiments, each of the components represented by a block as illustrated in FIGS. 1, 4, 7A, 8, 9, 11, 13, 16A, 16B, 17 and 18 may be implemented as various numbers of hardware, software and/or firmware structures that execute respective functions described above, according to embodiments. For example, at least one of these components may include various hardware components including a digital circuit, a programmable or non-programmable logic device or array, an application specific integrated circuit (ASIC), transistors, capacitors, logic gates, or other circuitry using use a direct circuit structure, such as a memory, a processor, a logic circuit, a look-up table, etc., that may execute the respective functions through controls of one or more microprocessors or other control apparatuses. Also, at least one of these components may include a module, a program, or a part of code, which contains one or more executable instructions for performing specified logic functions, and executed by one or more microprocessors or other control apparatuses. Also, at least one of these components may further include or may be implemented by a processor such as a central processing unit (CPU) that performs the respective functions, a microprocessor, or the like. Functional aspects of embodiments may be implemented in algorithms that execute on one or more processors. Furthermore, the components, elements, modules or units represented by a block or processing steps may employ any number of related art techniques for electronics configuration, signal processing and/or control, data processing and the like.

While aspects of example embodiments have been particularly shown and described, it will be understood that various changes in form and details may be made therein without departing from the spirit and scope of the following claims.

## Claims

1. A storage device comprising:
a first memory configured to store a plurality of pieces of debug information; and
a controller configured to:
check an access level of target debug information among the plurality of pieces of debug information according to a debug information read command provided by a host device; and
perform a security operation for the target debug information based on the access level of the target debug information.

2. The storage device of claim 1, wherein the controller is further configured to, based on the access level of the target debug information being a first access level, skip the security operation, read the target debug information from the first memory, and transmit the read target debug information to the host device.

3. The storage device of claim 2, wherein the target debug information is any one or any combination of general information and model number information of the storage device.

4. The storage device of any one of claims 1 to 3, wherein the security operation comprises, based on the access level of the target debug information being a second access level, an operation of checking whether the host device is authenticated according to a debug user authentication flag, and
wherein the controller is further configured to read the target debug information from the first memory and transmit the read target debug information to the host device based on the host device being authenticated and the access level of the target debug information being the second access level.

5. The storage device of claim 4, wherein the target debug information comprises any one or any combination of temperature information of the storage device and failure history information about operations of the storage device.

6. The storage device of claim 4 or 5, wherein the controller is further configured to perform a debug user authentication operation in association with the host device and store an authentication result in the debug user authentication flag.

7. The storage device of claim 6, wherein the controller is further configured to perform the debug user authentication operation based on a hash-based message authentication code, HMAC, method.

8. The storage device of any one of claims 1 to 7, wherein the security operation comprises, based on the access level of the target debug information being a third access level, any one or any combination of an operation of checking whether the host device is authenticated based on a debug user authentication flag and an encryption operation for the target debug information, and
wherein the controller is further configured to control the target debug information encrypted by the encryption operation to be transmitted to the host device based on the host device being authenticated and the access level of the target debug information being the third access level.

9. The storage device of claim 8, wherein the target debug information comprises any one or any combination of key information for at least one security function supported by the storage device and code information about firmware executed by the controller.

10. The storage device of claim 8 or 9, wherein the controller is further configured to perform the encryption operation based on an advanced encryption standard, AES method.

11. The storage device of any one of claims 1 to 10, wherein the security operation comprises, based on the access level of the target debug information being a fourth access level, an operation of refusing access to the target debug information, and
wherein the controller is further configured to notify the host device that the target debug information is not accessible based on the access level of the target debug information being the fourth access level.

12. The storage device of any one of claims 1 to 11, wherein the controller is further configured to generate a management table indicating access levels mapped to the plurality of pieces of debug information, and check the access level of the target debug information using the management table.

13. The storage device of claim 12, wherein the management table comprises a start address field and an end address field indicating addresses respectively indicating locations where the plurality of pieces of debug information are stored, and an access level field indicating access levels of the plurality of pieces of debug information.

14. The storage device of claim 12, wherein the management table comprises a symbol field indicating the plurality of pieces of debug information and an access level field indicating access levels of the plurality of pieces of debug information.

15. The storage device of claim 1, wherein the security operation comprises any one or any combination of a debug user authentication operation for the host device and an encryption operation for the target debug information, and
wherein the storage device further comprises a second memory configured to store a debug user authentication key used in the debug user authentication operation, a debug user authentication flag indicating a result of the debug user authentication operation, a debug encryption key used in the encryption operation, and a nonce used for generation of the debug user authentication key and the debug encryption key.
